Europäisches Patentamt

European Patent Office

Office européen des brevets

(11) Veröffentlichungsnummer: **0 421 101 A1**

# (12) EUROPÄISCHE PATENTANMELDUNG

(21) Anmeldenummer: 90115902.0

(22) Anmeldetag: 20.08.90

(51) Int. Cl.5: **G07F 7/06**

(30) Priorität: 30.09.89 DE 3932788

(43) Veröffentlichungstag der Anmeldung:
**10.04.91 Patentblatt 91/15**

(84) Benannte Vertragsstaaten:
**AT BE CH DE ES FR GB GR IT LI LU NL SE**

(71) Anmelder: **VENDORET HOLDING S.A.**
**304, Route de Thionville**
**L-5884 Luxemburg-Hesperange(LU)**

(72) Erfinder: **Merchel, Horst**
**Rötestrasse 10**
**W-7120 Bietigheim-Bissingen(DE)**

(74) Vertreter: **Patentanwaltsbüro Cohausz &**
**Florack**
**Schumannstrasse 97**
**W-4000 Düsseldorf 1(DE)**

(54) **Vorrichtung zum Ankoppeln eines Einkaufswagens.**

(57) Die Erfindung betrifft Vorrichtung zum Ankoppeln eines von Hand schiebbaren Einkaufswagens an einen zweiten Einkaufwagen und/oder an eine Station, an der Einkaufwagen gesammelt werden, wobei in die Vorrichtung (5-8) ein Pfand, insbesondere eine Münze einwerfbar ist, um den Wagen zu entkoppeln, und beim Ankoppeln das Pfand freigegeben wird, und das Gehäuse der Vorrichtung (5-8) am waagerechten Wagengriff (1) befestigt ist, mit dem der Wagen von Hand verschiebbar ist, wobei sie ein längliches Gehäuse (5) aufweist, das den Wagengriff (1) bildet und sich zumindest über den größten Teil der Länge des Wagengriffes erstreckt.

Fig. 1

## VORRICHTUNG ZUM ANKOPPELN EINES EINKAUFWAGENS

Die Erfindung betrifft eine Vorrichtung zum Ankoppeln eines von Hand schiebbaren Einkaufwagens an einen zweiten Einkaufwagen und/oder an eine Station, an der Einkaufwagen gesammelt werden, wobei in die Vorrichtung ein Pfand insbesondere eine Münze einwerfbar ist um den Wagen zu entkoppeln, und beim Ankoppeln das Pfand freigegeben wird und das Gehäuse der Vorrichtung am waagerechten Wagengriff befestigt ist, mit dem der Wagen von Hand verschiebbar ist

Es ist bekannt an Einkaufwagen Schließvorrichtungen zu befestigen, die über ein an der Vorrichtung festes Glied oder über ein an einer Kette befestigtes Koppelglied an einen zweiten Einkaufwagen bzw. an dessen Vorrichtung befestigbar sind, nachdem die zwei Einkaufwagen ineinander geschoben wurden. Ein Entkoppeln hierbei wird dadurch erreicht, daß in die erste Schließvorrichtung eine Münze geworfen wird, die nach dem Ankoppeln wieder frei wird.

Diese bekannten Schließvorrichtungen sind an den Einkaufwagen entweder seitlich oder am Griff befestigt. Sie stellen ein zusätzliches am Einkaufwagen vorstehendes Teil dar, das nicht nur unschön wirkt, sondern auch durch Anstoßen am vorstehenden Bereich leicht beschädigt werden kann. Auch ist es aus der DE-A 37 14 115 bekannt, das Münzschloßgehäuse mit Abschnitten des Wagengriffes einteilig auszuführen.

Aufgabe der Erfindung ist es, eine Erfindung der eingangs genannten Art so zu verbessern, daß sie in den Einkaufwagen integriert ist und damit bei optisch ansprechendem Äußeren eine hohe Sicherheit gegen Beschädigung gewährleistet.

Dieser Aufgabe wird erfindungsgemäß dadurch gelöst, daß sie ein längliches Gehäuse aufweist, das den Wagengriff bildet und sich zumindest über den größten Teil der Länge des Wagengriffes erstreckt.

Eine solche Vorrichtung bildet selber den Griff des Einkaufwagens und ist damit ein integrierter Bestandteil des Einkaufwagens. Bei einfachster Konstruktion und Montage ist die Vorrichtung ein unentfernbarer Bestandteil, wobei keine Teile der Vorrichtung wesentlich vorstehen und damit eine Beschädigungs- und Verletzungsgefahr wesentlich verringert ist. Darüber hinaus wird ein ansprechendes optisches Äußeres erreicht.

Vorteilhafte Ausgestaltungen der Erfindung sind in den Unteransprüchen ausgeführt.

Ein Ausführungsbeispiel der Erfindung ist in den Zeichnungen dargestellt und wird im folgenden näher beschrieben. Es zeigen:

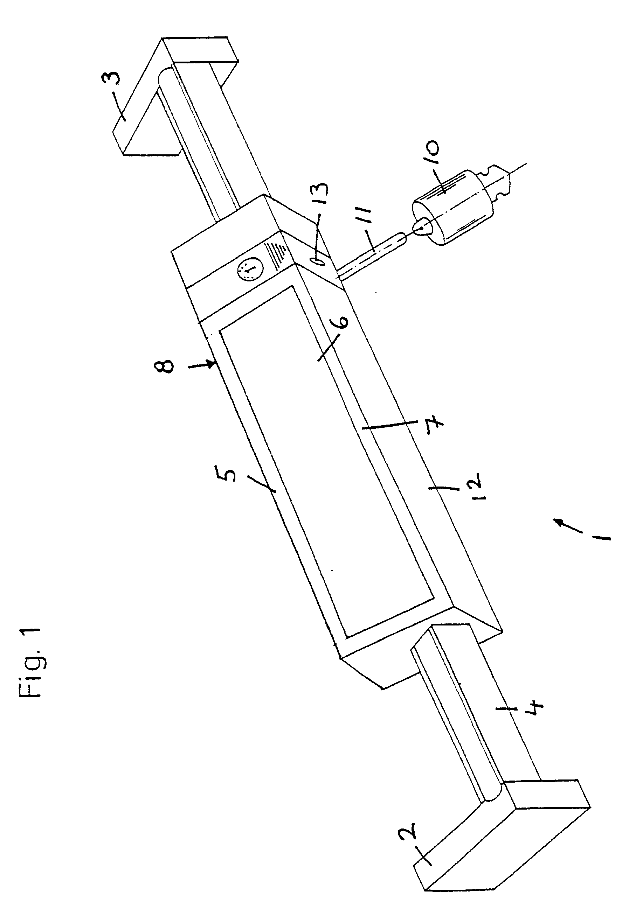

Fig. 1 eine perspektivische Ansicht eines Griffs in einem ersten Ausführungsbeispiel;

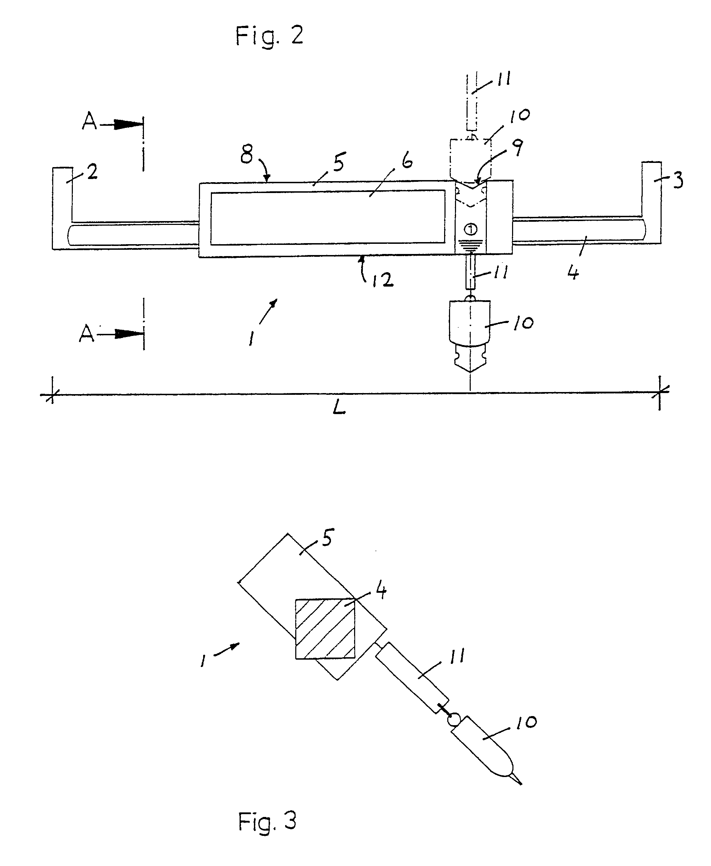

Fig. 2 eine Ansicht von oben des ersten Ausführungsbeispiels;

Fig. 3 einen Schnitt nach A-A in Fig. 2;

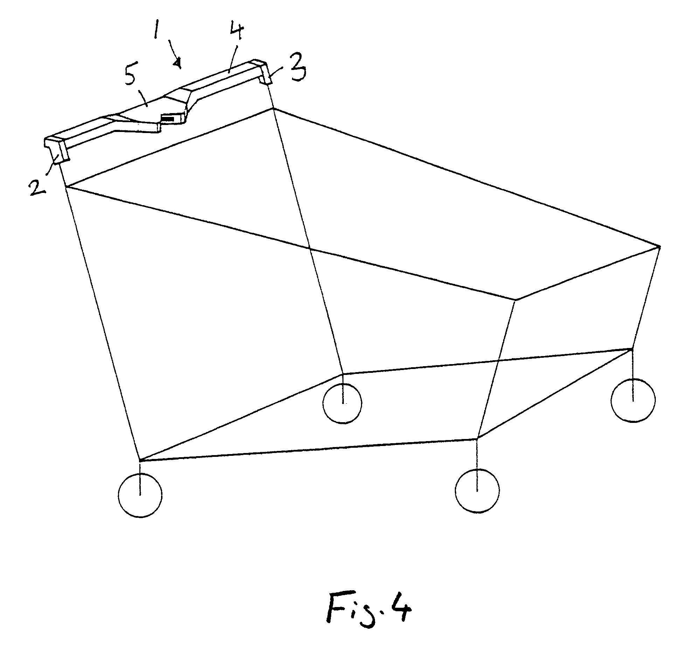

Fig. 4 eine perspektivische Ansicht eines Einkaufwagens eines zweiten Ausführungsbeispiels;

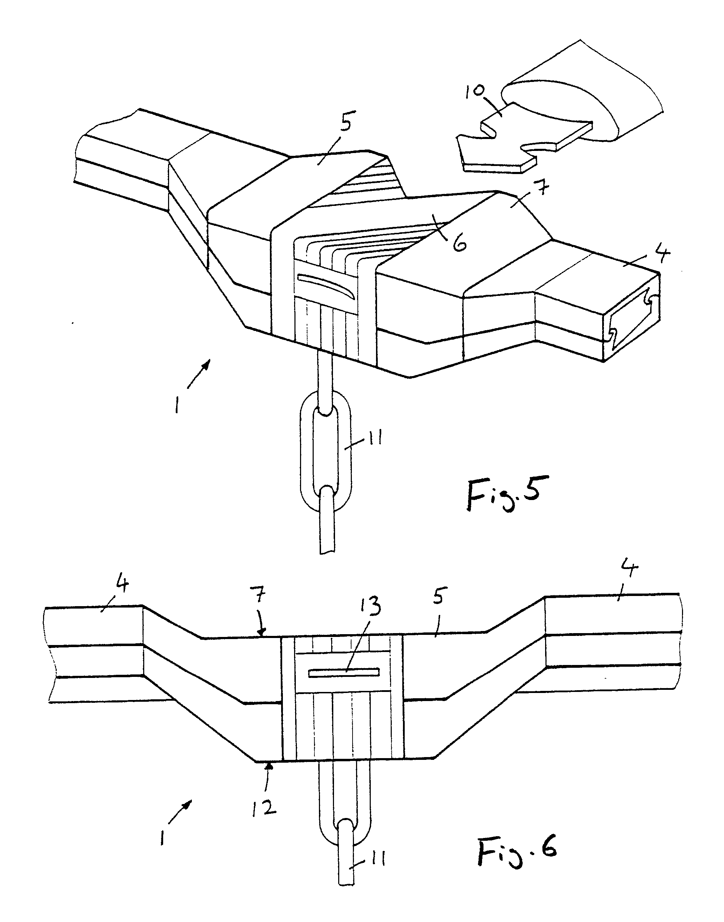

Fig. 5 eine perspektivische Ansicht eines Ausschnitts des Griffes des zweiten Aufführungsbeispiels;

Fig. 6 eine Seitenansicht des Griffes nach Fig. 5.

Der Griff 1 weist 2 Seitenteile 2,3 auf, die in Fahrtrichtung des Wagens gesehen an der Wagenrückseite zu beiden Wagenseiten oben befestigt sind. Zwischen den Seitenteilen 2,3 erstreckt sich ein waagerechtes Profil 4, das im mittleren Bereich in ein kastenförmiges (quaderförmiges) Teil 5 übergeht, das sich etwa mittig zwischen den Seitenteilen 2,3 befindet. Das Teil 5 bildet ein Gehäuse für eine Koppelvorrichtung, wobei die Längsrichtung und damit die größte Länge des Teils 5 waagerecht ist und quer zur Fahrtrichtung.

Die flache Oberseite 7 des Teils 5 trägt eine Werbefläche 6, die für die verschiedensten Zwecke genutzt werden kann. In der Vorderseite 8 des Teils 5 befindet sich eine Öffnung 9, die in ein Einsteckglied 10 schiebbar ist, das an einer Kette 11 befestigt ist, die wiederum am Teil 5 fest ist. An der Rückseite 12 des Teils 5 befindet sich eine schlitzförmige Öffnung 13, in die eine Münze einschiebbar ist, um hierdurch das Glied 10 eines benachbarten Einkaufwagens zu lösen. Wird danach das Glied 10 eines anderen Einkaufwagens wieder eingeschoben, so wird die Münze freigegeben.

In nicht gezeigten alternativen Ausführungsbeispielen kann das Teil 5 auch die gesamte Länge L des Griffes einnehmen, wobei der Querschnitt des Teils 5 nicht nur rechteckförmig, sondern auch kreisförmig oder oval sein kann.

Im zweiten dargestellten Ausführungsbeispiel ist das Gehäuse zweifach abgeknickt, wobei der mittlere Bereich einen größeren Querschnitt aufweist als die äußeren Bereiche, die sich verjüngend in die seitlichen Griffbereiche übergehen.

## Ansprüche

1. Vorrichtung zum Ankoppeln eines von Hand schiebbaren Einkaufwagens an einen zweiten Einkaufwagen und/oder an eine Station, an der Einkaufwagen gesammelt werden, wobei in die Vorrichtung (5-8) ein Pfand insbesondere eine Münze einwerfbar ist, um den Wagen zu entkoppeln, und beim Ankoppeln das Pfand freigegeben wird, und das Gehäuse der Vorrichtung (5-8) am waagerechten Wagengriff (1) befestigt ist, mit dem der Wagen von Hand verschiebbar ist, **dadurch gekennzeichnet**, daß sie ein längliches Gehäuse (5) aufweist, das den Wagengriff (1) bildet und sich zumindest über den größten Teil der Länge des Wagengriffes erstreckt.

2. Vorrichtung nach Anspruch 1, **dadurch gekennzeichnet**, daß sie im Inneren des Wagengriffes angeordnet ist.

3. Vorrichtung nach Anspruch 1 oder 2, **dadurch gekennzeichnet,** daß das Gehäuse (5) sich über die gesamte Länge des Wagengriffes erstreckt.

4. Vorrichtung nach Anspruch 3, **dadurch gekennzeichnet,** daß der Querschnitt des Gehäuses (5) über die Länge des Griffes (1) gleich bleibt.

5. Vorrichtung nach einem der vorherigen Ansprüche, **dadurch gekenhzeichnet**, daß das Gehäuse (5) kastenförmig ist.

6. Vorrichtung nach einem der vorherigen Ansprüche, **dadurch gekennzeichnet,** daß die nach oben gewandte Seite (7) des Gehäuses eine Werbefläche (6) aufweist.

7. Vorrichtung nach einem der vorherigen Ansprüche, **dadurch gekennzeichnet,** daß in einer dem Benutzer zugewandten Seite (12) des Gehäuses (5) eine Öffnung (13) zum Einwerfen des Pfandes ist.

8. Vorrichtung nach einem der vorherigen Ansprüche, **dadurch gekennzeichnet,** daß in einer dem Benutzer abgewandten Seite (8) des Gehäuses (5) eine Öffnung (9) zur Aufnahme eines Koppelgliedes (10) ist, das am zweiten Einkaufswagen befestigt ist.

9. Vorrichtung nach einem der vorherigen Ansprüche, **dadurch gekennzeichnet,** daß der senkrechte Querschnitt des Gehäuses der Vorrichtung rechteckig, kreisförmig oder oval ist.

Fig. 1

Fig. 2

Fig. 3

Fig. 4

Fig.5

Fig.6

7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| D,Y | DE - A1 - 3 714 115 (RUDOLF WANZL GMBH & CO. KG) * Gesamt * | 1,2,7, 8 | G 07 F 7/06 |
| A | -- | 3,5 | |
| Y | EP - A2 - 0 157 943 (SCHRAMME et al.) * Gesamt * | 7 | |
| A | -- | 1,8 | |
| Y | US - A - 4 691 816 (TRUBIANO) * Gesamt * | 1,2,8 | |
| A | -- | 5 | |
| A | EP - A2 - 0 231 934 (RUDOLF WANZL KG) * Gesamt * | 1 | |
| A | EP - A2 - 0 199 274 (RUDOLF WANZL KG) * Gesamt * ---- | 1 | RECHERCHIERTE SACHGEBIETE (Int. Cl.⁵) G 07 F 7/00 |

Der vorliegende Recherchenbericht wurde für alle Patentansprüche erstellt.

| Recherchenort | Abschlußdatum der Recherche | Prüfer |
|---|---|---|
| WIEN | 04-01-1991 | BEHMER |